# FASCICULE DE BREVET EUROPEEN

(11) **EP 1 899 447 B1**
(45) Date de publication et mention de la délivrance du brevet: **03.01.2018**
(21) Numéro de dépôt: 06778592.3
(22) Date de dépôt: 14.06.2006
(51) Int. Cl.: C10M 173/02, B29D 30/06, B29C 37/00, B29C 33/64, C10M 107/50

(54) **COMPOSITION À BASE DE SILOXANE DESTINÉE AU MOULAGE-DÉMOULAGE DE PNEUMATIQUES**
AUF SILOXAN BASIERENDE ZUSAMMENSETZUNG ZUM FORMEN/ENTFORMEN VON REIFEN
SILOXANE-BASED COMPOSITION WHICH IS INTENDED FOR TYRE MOULDING/STRIPPING

(30) Priorité: 29.06.2005 FR 0506633
(43) Date de publication de la demande: 19.03.2008
(73) Titulaire: Bluestar Silicones France, 69486 Lyon (FR)
(72) Inventeur: BREUNIG, Stefan, F-38200 Villette de Vienne (FR)
(86) Numéro de dépôt international: PCT/FR2006/001343
(87) Numéro de publication internationale: WO 2007/003731

(56) Documents cités:
- EP-A- 0 279 372
- FR-A- 2 801 896
- FR-A- 2 838 447

## Description

La présente invention concerne des compositions sous forme d'émulsion d'huile silicone destinées à être appliquées sur les vessies de vulcanisation et/ou sur les bandages pneumatiques ou semi-pneumatiques, pour faciliter le moulage-démoulage lors de la fabrication de pneumatiques.

L'invention concerne en particulier une application en tant que composition lubrifiante particulièrement appropriée à la lubrification des vessies de vulcanisation utilisées lors du façonnage et de la vulcanisation de bandages pneumatiques ou semi-pneumatiques.

L'invention concerne également les vessies de vulcanisation revêtues d'une composition lubrifiante et/ou d'un primaire d'accrochage selon l'invention ainsi que les bandages pneumatiques ou semi-pneumatiques revêtus de ladite composition lubrifiante.

Selon deux autres de ses aspects, l'invention concerne un procédé de préparation des compositions lubrifiantes de l'invention ainsi que l'utilisation desdites compositions lubrifiantes pour la lubrification des vessies de vulcanisation.

Les pneumatiques en caoutchouc pour véhicules sont habituellement fabriqués en moulant et en vulcanisant une enveloppe crue, ou non vulcanisée et non façonnée, dans une presse de moulage dans laquelle l'enveloppe crue est pressée vers l'extérieur contre la surface d'un moule au moyen d'une vessie dilatable par un fluide interne. Par ce procédé, l'enveloppe crue est façonnée contre la surface externe du moule qui définit le dessin de la bande de roulement de l'enveloppe et la configuration des flancs. Par chauffage, l'enveloppe est vulcanisée. En général, la vessie est dilatée par la pression interne fournie par un fluide tel qu'un gaz chaud, de l'eau chaude et/ou de la vapeur, qui participe lui aussi au transfert de chaleur pour la vulcanisation. On laisse alors l'enveloppe refroidir un peu dans le moule, ce refroidissement étant parfois favorisé par l'introduction d'eau froide ou plus fraîche dans la vessie. Puis on ouvre le moule, on dégonfle la vessie en relâchant la pression du fluide interne et on retire l'enveloppe du moule à enveloppes. Cette utilisation des vessies de vulcanisation des enveloppes est bien connue dans la technique.

Il est admis qu'il se produit un mouvement relatif notable entre la surface de contact externe de la vessie et la surface interne de l'enveloppe au cours de la phase de dilatation de la vessie avant la vulcanisation complète de l'enveloppe. De même, il se produit également un mouvement relatif considérable entre la surface de contact externe de la vessie et la surface interne vulcanisée de l'enveloppe, après que l'enveloppe a été moulée et vulcanisée, au cours du dégonflement et de l'extraction de la vessie du pneumatique.

Si une lubrification adéquate n'est pas prévue entre la vessie et la surface interne de l'enveloppe, la vessie a généralement tendance à se gondoler, ce qui entraîne une déformation de l'enveloppe dans le moule et aussi une usure et un dépolissage excessifs de la surface de la vessie elle-même. La surface de la vessie tend également à coller sur la surface interne de l'enveloppe après la vulcanisation de l'enveloppe et au cours de la partie du cycle de vulcanisation de l'enveloppe au cours de laquelle la vessie est dégonflée. En outre, des bulles d'air peuvent être emprisonnées entre les surfaces de la vessie et de l'enveloppe, et favoriser l'apparition de défauts de vulcanisation des enveloppes résultant d'un transfert de chaleur inadéquat.

Pour cette raison, la surface externe de la vessie ou la surface interne de l'enveloppe crue ou non vulcanisée est revêtue d'un lubrifiant approprié, parfois désigné sous le nom de "ciment de chemisage".

De nombreuses compositions de lubrifiant ont été proposées à cet effet dans la technique.

On connaît notamment les compositions lubrifiantes décrites dans la demande de brevet FR 2 494 294, lesquelles contiennent, à titre de constituants principaux, un polydiméthylsiloxane réactif présentant de préférence des groupes terminaux hydroxyle, un agent réticulant comprenant de préférence des fonctions Si-H et éventuellement un catalyseur de polycondensation.

Le brevet US 3,872,038 décrit un agent de démoulage interne pour pneumatiques à base d'une émulsion silicone et d'une charge, par exemple le mica pour assurer une bonne efficacité en échappement de l'air. A défaut d'un système réactif, une gomme silicone est utilisée pour maintenir la charge sur la surface du caoutchouc après application. Cette formulation permet de laisser s'échapper l'air qui est piégé entre la vessie et le pneu cru mais ne permet pas de procéder à plusieurs démoulages. Les demandes de brevet FR 2 801 896 et FR 2 838 447 décrivent des compositions à base de siloxane ne dégageant pas d'hydrogène, destinées au moulage démoulage de pneumatiques.

La demande de Brevet EP 0 279 372 décrit une émulsion à base de siloxane destinée au moulage démoulage de pneumatiques.

Usuellement, les vessies dilatables, avant d'être enduites, sur leur surface externe (celle qui vient au contact du bandage) d'une composition lubrifiante, peuvent subir un pré-traitement consistant à appliquer une couche régulière d'une composition dite primaire ou encore primaire d'accrochage.

La présente invention a donc pour objectif de proposer des compositions aqueuse lubrifiantes améliorées et présentant de surcroît d'excellentes caractéristiques de glissement et de durabilité, ce qui les rend parfaitement appropriées à la lubrification des vessies utilisées lors de la vulcanisation des bandages pneumatiques et semi-pneumatiques.

Ces compositions permettent de démouler plusieurs pneumatiques par application, d'assurer une bonne performance en lubrification, mais aussi en échappement de l'air, évitant ainsi la formation de bulles d'air emprisonnées entre les surfaces de la vessie et de l'enveloppe et par voie de conséquence l'apparition de défauts de vulcanisation des enveloppes résultant d'un transfert de chaleur inadéquat.

De manière générale, l'invention a pour objet une composition lubrifiante, sous forme d'émulsion huile dans eau, à base de polyorganosiloxane polymérisable et/ou réticulable par déshydrogéno-condensation telle que définie dans la revendication 1. La préparation des latex est obtenue par une réaction de (co)polymérisation qui est réalisée de manière connue en soi, en émulsion aqueuse en présence d'au moins un initiateur radicalaire avec une concentration en monomères dans le milieu réactionnel comprise généralement entre 20 et 60 % en poids. Tout type d'initiateur ou amorceur à radicaux libres habituels dans la polymérisation radicalaire peut convenir.

Des exemples d'initiateurs comprennent les hydropéroxydes tels que l'eau oxygénée, l'hydropéroxyde de diisopropylbenzène, les persulfates de sodium, de potassium ou d'ammonium, et les initiateurs cationiques comme l'azobis(isobutyronitrile).

Ces initiateurs peuvent être associés à un réducteur comme par exemple le bisulfite. La quantité se situe généralement entre 0,05 et 2 % en poids par rapport à la quantité des monomères.

La température de polymérisation, fonction de l'initiateur mis en oeuvre, est généralement comprise entre 50°C et 100°C, de préférence entre 70 et 90°C. Dans le cas où la polymérisation est effectuée en émulsion aqueuse, la stabilisation des particules est assurée, si nécessaire, par tout système de stabilisation colloïdale connu comme les émulsifiants anioniques, cationiques, amphotères et non ioniques. La polymérisation peut être réalisée en continu, en discontinu ou semi-continu avec introduction d'une partie des monomères en continu et être du type 'ensemencé' ou "incremental selon toute variante connue pour l'obtention des particules de structure homogène et hétérogène.

Des exemples de Latex disponibles commercialement sont, par exemple, les copolymères styrène/acrylate d'alkyle ou styrène/acrylate d'alkyle/acide acrylique de la gamme RHODOPASS® (par exemple RHODOPAS® DS910, RHODOPAS® DS2800, RHODOPAS® DS1003, RHODOPAS® DS2818, RHODOPAS® DS2810 vendus par la société RHODIA, les latex styrène/acrylate d'alkyle de la gamme LIPATON® vendus par la société POLYMER LATEX, les copolymères styrène/acrylate d'alkyle ou styrène/acrylate d'alkyle/acide acrylique de la gamme UCAR® Latex vendus par la société DOW CHEMICAL.

D'une manière avantageuse, le latex est choisi parmi les copolymères styrène/acrylate d'alkyle ou styrène/acrylate d'alkyle/acide acrylique de la gamme RHODOPASS®. Le latex de polymère organique (C) provient de la polymérisation :
- d'au moins un monomère (méth)acrylate d'alkyle choisi parmi le groupe constitué par: le (méth)acrylate de méthyle, - le (méth)acrylate d'éthyle - le (méth)acrylate de propyle - le (méth)acrylate de butyle
- d'un monomère styrène, et
- éventuellement d'au moins un monomère chois parmi le groupe constitué par : l'acide acrylique et l'acide méthacrylique.

Selon un mode de réalisation, le latex de polymère organique est choisi parmi: les copolymères styrène/acrylate de butyle/acide acrylique avec les rapports pondéraux suivants par rapport au poids total du copolymère :
- monomère styrène : entre 25 et 55 % en poids,
- monomère acrylate de butyle : entre 74,5 et 40 % en poids, et
- monomère acide acrylique : entre 0,5 et 5 % en poids.

Par viscosité dynamique, on entend dans le cadre de l'invention la viscosité de type Newtonienne, c'est-à-dire la viscosité dynamique, mesurée de manière connue en soi à une température donnée, à un gradient de vitesse de cisaillement suffisamment faible pour que la viscosité mesurée soit indépendante du gradient de vitesse.

A titre de constituant préféré que le polyorganosiloxane réactif **(A)** comprend les motifs siloxyles suivants :
M = [(OH)(R²)₂SiO_{1/2}] et D= [R³R⁴SiO_{2/2}]
   dans lesquels:
   - R², R³ et R⁴ sont des radicaux, identiques ou différents, choisis parmi le groupe constitué par : les radicaux alkyles linéaires ou ramifiés en C₁-C₆ (tels que par exemple méthyle, éthyle, propyle, isopropyle, butyle, isobutyle, t-butyle, n-pentyle, n-hexyle), les radicaux cycloalkyles en C₃-C₈ (tels que par exemple cyclopentyle, cyclohexyle), les radicaux aryles en C₆-C₁₀ (tels que par exemple phényle, naphtyle) et les radicaux alkylarylènes en C₆-C₁₅ (tels que par exemple tolyles, xylyle).

Parmi les constituants préférés pour le polyorganosiloxane polyorganosiloxane réactif (A), on peut citer les polyorganosiloxanes linéaires de formule : 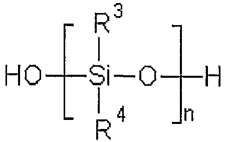 formule dans laquelle n est un entier supérieur ou égal à 50, R³ et R⁴, identiques ou différents, représentent: un alkyle en C₁-C₆; un cycloalkyle en C₃-C₈ ; un alcényle en C₂-C₈; un cycloalcényle en C₅-C₈, un aryle, un alkylarylène et un arylalkylène; chacun des radicaux précités étant éventuellement substitué par un atome d'halogène (et de préférence le fluor) ou un reste cyano.

Les huiles les plus utilisées, du fait de leur disponibilité dans les produits industriels, sont celles pour lesquelles R³ et R⁴ sont indépendamment choisis parmi le groupe des radicaux constitué par : un méthyle, un éthyle, un propyle, un isopropyle, un cyclohexyle, un vinyle, un phényle, et un 3,3,3-trifluoropropyle. De manière très préférée, au moins environ 80 % en nombre de ces radicaux sont des radicaux méthyle.

Conformément à l'invention, on préférera, toutefois, partir d'huiles polyorganosiloxane **A** déjà polymérisées pour la préparation de l'émulsion, en utilisant par exemple les techniques d'émulsification de la phase silicone décrites dans FR-A-2 697 021.

Selon un mode préféré de l'invention, le polyorganosiloxane réactif **(A)** est un α,ω-dihydroxypolydiméthylsiloxane.

L'agent réticulant **(B)** est préférentiellement choisi parmi ceux qui possèdent au moins un motif de formule (II) et qui sont terminés par des motifs de formule (III) ou cycliques constitués de motifs de formule (II) représentées ci-dessous : 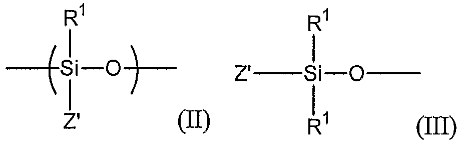 dans lesquelles :
- les symboles R¹, sont identiques ou différents et représentent :
   un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   un radical cycloalkyle contenant entre 5 et 8 atomes de carbone cycliques, éventuellement substitué, ou
      un radical aryle contenant entre 6 et 12 atomes de carbone éventuellement substitué, une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alcoxyles contenant 1 à 3 atomes de carbone,
- les symboles Z' sont semblables ou différents et représentent :
   - un radical hydrogène, ou
   - un groupement répondant à la même définition que celle donnée ci-dessus pour R¹, avec, par molécule, au moins trois des symboles Z' représentant H.

Comme exemple d'agent réticulant **(B)** on peut citer le composé de formule **(IV)** suivante : 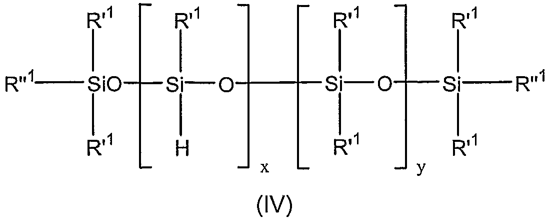 dans laquelle :
- x représente un nombre entier ou fractionnaire variant entre 1 et 10000,
- y représente un nombre entier ou fractionnaire variant entre 0 et 10000,
- R'¹ et R"¹ représentent indépendamment l'un de l'autre :
   un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   • un radical cycloalkyle contenant entre 5 et 8 atomes de carbone cycliques, éventuellement substitué,
   • un radical aryle contenant entre 6 et 12 atomes de carbone éventuellement substitué,
   • une partie aralkyle ayant une partie alkyle contenant entre 5 et 14 atomes de carbone et une partie aryle contenant entre 6 et 12 atomes de carbone, substituée éventuellement sur la partie aryle,
- R"¹ pouvant également correspondre à l'hydrogène, et
- avec la condition selon laquelle le polyorganosiloxane comprend au moins trois motifs réactifs ≡SiH

Conviennent tout particulièrement à l'invention à titre d'agent réticulant **(B)** les composés suivants : 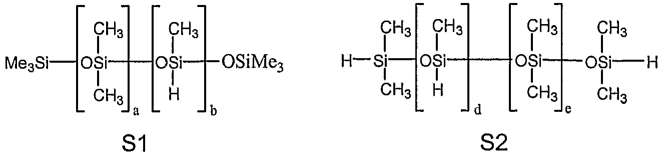 avec a, b, c, d et e représentant un nombre variant de :
- dans le polymère de formule S1 :
   0 ≤ a ≤ 10000 de préférence 0 ≤ a ≤ 8000 de préférence 0 ≤ a ≤5000, et
   3 ≤ b ≤ 10000 de préférence 10 ≤ b ≤ 100 de préférence 30 ≤ b ≤ 55
- dans le polymère de formule S2 :
   1 ≤ d ≤ 10000 de préférence 20 ≤ d ≤ 60, et
   0 ≤ e ≤ 10000 de préférence 0 ≤ e ≤ 1000

Dans le cadre de l'invention, on entend par "non réactive" une huile qui dans les conditions d'émulsification, de préparation de la composition lubrifiante et d'utilisation, ne réagit chimiquement avec aucun des constituants de la composition.

A titre de constituant **(f)** l'huile polyorganosiloxane linéaire non réactive **(F)** présentant une viscosité dynamique de 50 à 100000 mPa.s à 25°C. Comme exemple, on peut citer les polyorganosiloxanes linéaires :
- constitués le long de chaque chaîne :
   - des motifs de formule R⁵R⁶SiO_{2/2}, éventuellement associés à des motifs de formule (R⁵)₂SiO_{2/2},
   - des motifs de formule (R⁶)₂SiO_{2/2}, éventuellement associés à des motifs de formule (R⁵)₂SiO_{2/2},
   - des motifs de formule R⁵R⁶SiO_{2/2} et des motifs de formule (R⁶)₂SiO_{2/2}, éventuellement associés à des motifs de formule (R⁵)₂SiO_{2/2},
- et bloqués à chaque extrémité de chaîne par un motif de formule (R⁷)₃SiO_{1/2} dont les radicaux R⁷, identiques ou différents, sont choisis parmi des radicaux R⁵ et R⁶ ;
- où les radicaux R⁵ et R⁶, substituants organiques monovalents des divers motifs siloxyles mentionnés supra, ont les définitions suivantes :
   - les radicaux R⁵, identiques ou différents entre eux, sont choisis parmi : les radicaux alkyles linéaires ou ramifiés en C₁-C₆ (tels que par exemple méthyle, éthyle, propyle, isopropyle, butyle, isobutyle, t-butyle, n-pentyle, n-hexyle), les radicaux cycloalkyles en C₃-C₈ (tels que par exemple cyclopentyle, cyclohexyle), et les radicaux alcényles linéaires ou ramifiés en C₂-C₈ (tels que par exemple vinyle, allyle),
   - les radicaux R⁶, identiques ou différents entre eux, sont choisis parmi : les radicaux aryles en C₆-C₁₀ (tels que par exemple phényle, naphtyle), les radicaux alkylarylènes en C₆-C₁₅ (tels que par exemple tolyles, xylyle), les radicaux arylalkylènes en C₆-C₁₅ (tels que par exemple benzyle).
La composition lubrifiante selon l'invention comprend :
- de 1 à 30 parties en poids et de préférence de 3 à 15 parties en poids du constituant (a);
- de 1 à 30 parties en poids du constituant (b),
- de 0,1 à 10 parties en poids du constituant (c),
- de 3 à 25 parties en poids du constituant (d),
- de 0,5 à 10 parties en poids du constituant (e),
- de 0 à 30 parties en poids du constituant (f),
- de 0 à 30 parties en poids des constituants (g),
- de 0 à 10 parties en poids du constituant (h), et
- de 20 à 60 parties en poids constituant (i) ;
pour 100 parties en poids de la somme des constituants (a) à (i).

Le catalyseur de déshydrogéno-condensation peut-être présent dans la composition selon l'invention. Sa présence n'est qu'optionnelle du fait des températures rencontrées dans le cadre de l'application. Des exemples de catalyseurs de déshydrogéno-condensation utilisables dans le cadre de l'invention sont les sels organométalliques, et les titanates tels que l'orthotitanate de tétrabutyle. A titre de sel organométallique, on peut mentionner le naphténate de zirconium et l'octylate de zirconium. On peut aussi utiliser un composé catalytique à l'étain, généralement un sel d'organoétain. Les sels d'organoétain utilisables sont décrits en particulier dans l'ouvrage de NOLL, Chemistry and Technology of Silicones Academic Press (1968), page 397. On peut également définir comme composé catalytique à l'étain, soit des distannoxanes, soit des polyorganostannoxanes, soit le produit de réaction d'un sel d'étain, en particulier d'un dicarboxylate d'étain sur du polysilicate d'éthyle, comme décrit dans le brevet US-A-3 862 919.

Le produit de réaction d'un silicate d'alkyle ou d'un alkyltrialcoxysilane sur le diacétate de dibutylétain comme décrit dans le brevet belge BE-A-842 305, peut convenir aussi.

Selon une autre possibilité, on peut avoir recours à un sel d'étain II, tel que SnCl₂ ou l'octoate stanneux. Le catalyseur peut être un sel d'étain d'un acide organique, tels que le diacétate de dibutylétain, le dilaurate de dibutylétain, le dilaurate de dioctylétain, le dioctate de dibutylétain, le naphténate de zinc, le naphténate de cobalt, l'octylate de zinc, l'octylate de cobalt et le di(isomercaptoacétate) de dioctylétain. Des exemples de sels d'étain tels que les bischélates d'étain sont décrits dans les demande de brevet EP-A-147 323 et EP-A-235 049, les dicarboxylates de diorganoétain et, en particulier, les catalyseurs sont décrits dans le brevet britannique GB-A-1 289 900 (diacétate de dibutyl- ou de dioctylétain, le dilaurate de dibutyl- ou de dioctylétain.

Le catalyseur de déshydrogéno-condensation, lorsqu'il est présent, est généralement introduit dans l'émulsion à raison de 0,05 à 5 parties en poids, par rapport au poids total de l'émulsion.

La nature du tensioactif **(E)** sera facilement déterminée par l'homme du métier, l'objectif étant de préparer une émulsion stable. Les tensioactifs anioniques, cationiques, non-ioniques et zwitterioniques peuvent être employés seuls ou en mélange.

A titre de tensioactif anionique, on peut mentionner les sels de métaux alcalins des acides hydrocarbonés aromatiques sulfoniques ou les sels de métaux alcalins d'acides alkylsulfuriques. Les tensioactifs non-ioniques sont plus particulièrement préférés dans le cadre de l'invention. Parmi ceux-ci, on peut citer les éthers alkyliques ou aryliques de poly(oxyde d'alkylène), l'hexastéarate de sorbitan polyoxyéthyléné, l'oléate de sorbitan polyoxyéthyléné ayant un indice de saponification de 102 à 108 et un indice d'hydroxyle de 25 à 35 et les éthers de cétylstéaryle et de poly(oxyde d'éthylène).

A titre d'éther arylique de poly(oxyde d'alkylène), on peut mentionner les alkylphénols polyoxyéthylénés. A titre d'éther alkylique de poly(oxyde d'alkylène), on peut mentionner l'éther isodécylique de polyéthylèneglycol et l'éther triméthylnonylique de polyéthylèneglycol contenant de 3 à 15 unités d'oxyde d'éthylène par molécule.

On peut encore citer l'alcool isotridécylique éthoxylé, e.g. avec de 8 à 9 moles d'oxyde d'éthylène par mole d'alcool isotridécylique.

La quantité de tensioactif est fonction du type de chacun des constituants en présence ainsi que de la nature même du tensioactif utilisé. En règle générale, l'émulsion comprend de 0,5 à 10% en poids de tensioactif par rapport au poids total de l'émulsion (mieux encore de 0,5 à 7 % en poids).

La présence d'un système silicone réactif aide également à la dispersion homogène au de l'agent d'évacuation de l'air **(D).** C'est ainsi que lorsque le mica est utilisé il n'est pas nécessaire de lui faire subir un traitement de surface car l'hydrophobisation du mica, s'effectue in situ dans la composition. Cette hydrophobisation in situ aide à garder la dispersion de la charge fine et à stabiliser l'émulsion. La taille des particules de mica est de préférence inférieure à 500 µm, de préférence inférieure à 100 µm. De préférence, le mica est un mica broyé par voie humide (« wet ground mica »).

L'émulsion peut contenir aussi un ou plusieurs additif **(G)** ingrédients additionnels tels que par exemple des, des lubrifiants complémentaires, des agents anti-friction, des agents de coalescence, des agents mouillants ou dispersants, des charges minérales, des agents antimousse, des épaississants, des stabilisants, des conservateurs tels que des biocides et des antifongiques, en quantités pouvant varier considérablement, par exemple, entre 0,2 et 30% en poids de l'émulsion.

Des exemples d'épaississants sont les épaississants cellulosiques (carboxyméthylcellulose), acryliques, polyuréthane, les gommes hydrocolloïdales (gomme xanthane) et leurs mélanges.

En tant qu'agent de coalescence, on pourra utiliser les glycols et/ou les coupes pétrolières aliphatiques (fractions de distillation du pétrole).

Des agents mouillants ou dispersables utilisables dans le cadre de l'invention sont par exemple les phosphates, tels que par exemple l'hexamétaphosphate de sodium, les polyéthylèneglycols (PEG), ...

Les compositions de l'invention peuvent être préparées de façon conventionnelle par mise en oeuvre des méthodes classiques de l'état de la technique.

L'émulsification peut être directe ou par inversion.

Pour l'émulsification directe, le procédé consiste à mettre en émulsion dans une phase aqueuse contenant le tensioactif, un mélange des constituants (a), (b) et (f). On obtient directement une émulsion huile dans eau. Puis les constituants manquants peuvent être ajoutés, soit directement à l'émulsion (cas des constituants hydrosolubles), soit ultérieurement sous la forme d'émulsion (cas des constituants solubles dans la phase silicone).

La granulométrie de l'émulsion obtenue précédemment peut être ajustée par les méthodes classiques connues de l'homme du métier, notamment en poursuivant l'agitation dans le réacteur pendant une durée adaptée.

D'ordinaire, les procédés de l'invention sont mis en oeuvre à température ambiante. De préférence, on limite l'élévation de température qui peut résulter des étapes de broyage ou d'agitation. Notamment, on choisit de rester en deçà des 60 ou 65° C.

Les constituants (a) à (i) sont disponibles dans le commerce ou facilement accessibles à l'homme du métier par mise en oeuvre de procédés classiques décrits dans la technique antérieure.

L'invention a encore pour objet l'utilisation de la composition lubrifiante ainsi obtenue pour la lubrification d'articles divers.

Plus particulièrement, l'invention concerne l'utilisation de la composition lubrifiante pour la lubrification de la vessie de vulcanisation, de préférence en caoutchouc ou analogue et dilatable, lors du façonnage et de la vulcanisation de bandages pneumatiques ou semi-pneumatiques. La composition lubrifiante de l'invention peut être appliquée de façon quelconque, et par exemple par pulvérisation, par brossage ou encore à l'aide d'une éponge ou d'un pinceau. Il est préférable d'opérer de façon à recouvrir l'article à revêtir d'une couche régulière de revêtement.

La lubrification de la vessie de vulcanisation utilisée lors du façonnage et de la vulcanisation de bandages pneumatiques ou semi-pneumatiques peut être réalisée de deux façons différentes.

Lors de la fabrication des bandages pneumatiques ou semi-pneumatiques, un bandage cru est placé dans un moule à bandages, une vessie dilatable est disposée dans le moule, le moule est fermé et la vessie est dilatée par application d'une pression interne de fluide chaud, de telle sorte que le bandage se trouve plaqué contre le moule, façonné et vulcanisé. Le moule est alors ouvert, la vessie est dégonflée et le bandage est récupéré, façonné et vulcanisé. Une même vessie est utilisée pour la fabrication d'environ quelques centaines de bandages.

La vessie en caoutchouc dilatable utilisée lors de la fabrication des bandages est initialement revêtue d'une composition lubrifiante selon l'invention.

Au départ, la lubrification de la vessie est directe. Ensuite, il intervient un phénomène d'épuisement de l'effet lubrifiant de cette vessie.

Dans cette phase ultérieure, c'est la surface interne du bandage (celle qui vient au contact de la vessie) qui est revêtue de la composition lubrifiante. Il y a régénération de la lubrification de la vessie en caoutchouc par transfert à partir du bandage.

De façon générale, les cycles de pressage du moule/dégagement de la vessie, mis en oeuvre lors de la fabrication des bandages se succèdent de la façon suivante :
- la vessie peut-être initialement revêtue de la composition lubrifiante (lubrification directe) et chauffée entre 80 et180°C, de préférence entre 130 et 170°C, dans ou à l'extérieur de la presse. Elle est ensuite utilisée (sans revêtement ultérieur de la vessie, mais en réalisant un revêtement sur le premier bandage) pendant une durée de 5 à 10 cycles (chaque cycle aboutissant à la fabrication d'un bandage différent), puis
- les cycles suivants sont mis en oeuvre par l'utilisation de cette même vessie (pour laquelle le revêtement de lubrification est épuisé) à partir de bandages pneumatiques ou semi-pneumatiques qui sont alors à chaque fois revêtus de la composition lubrifiante de l'invention : la lubrification de la vessie a lieu dans ce cas par transfert.

On peut également ne pas traiter la vessie lors de sa 1^{ère} utilisation et dans ce cas on applique la composition lubrifiante sur la surface intérieure des deux premiers pneus crus.

La présente invention concerne donc également l'utilisation de la composition lubrifiante pour la lubrification des bandages pneumatiques ou semi-pneumatiques crus, comportant ou non sur leur surface externe des éléments qui constitueront la bande de roulement externe destinée à venir au contact du sol.

La composition lubrifiante de l'invention présente en outre d'excellentes propriétés de glissement, de durabilité et d'élasticité.

La présente invention concerne encore les articles lubrifiés à l'aide de la composition lubrifiante susceptible d'être obtenue par la mise en oeuvre du procédé qui vient d'être décrit précédemment.

Plus particulièrement, l'invention concerne :
- une vessie dilatable en caoutchouc revêtue sur sa surface externe d'une composition selon l'invention, pour le façonnage et la vulcanisation de bandages pneumatiques ou semi-pneumatiques ;
- une vessie en caoutchouc dilatable pouvant être obtenue par chauffage de la vessie dilatable définie ci-dessus, notamment à 80-180° C (de préférence 130-170° C), de façon à assurer la réticulation totale des constituants réticulables de l'émulsion.
- un bandage pneumatique ou semi-pneumatique cru comportant ou non des éléments qui constitueront sa bande de roulement externe destinée à venir au contact du sol, revêtu sur sa surface interne d'une composition lubrifiante selon l'invention.

Les exemples suivants qui illustrent l'invention témoignent des excellentes propriétés lubrifiantes des compositions de l'invention.

### EXEMPLE 1:

Les % indiqués ci-dessous sont en poids par rapport au poids total de la composition.

### Préparation d'une composition A selon l'invention :

Dans un mélangeur sont introduites l'eau (40,65 % en poids), un antimousse (Silicex^{e}141, fourni par la société Rhodia, 0,2% en poids), un biocide (0,15% en poids), un polyéthylèneglycol PEG 300 (0,95% en poids), un mica (taille de particules 39µm, 8,64 % en poids), un épaississant Rhéozan® (0,235 % en poids) avec un agent mouillant Trycol®5950 (0,7 % en poids). Après homogénéisation sont introduites :
- une émulsion (12,535 % en poids) à base d'une huile α,ω-dihydroxypolydimethylsiloxane de viscosité 135 000 mPa.S (40% en extrait sec),
- un latex styrène/acrylate de butyle/ acide acrylique sous forme d'émulsion Rhodopas® DS 2800 (7,00 % en poids, vendu par la société Rhodia), de l'acide acétique (0,08 % en poids) et une émulsion (28,46 % en poids) comprenant un mélange d'un polydiméthylhydrogénosiloxane de formule MD'₅₀M (selon une nomenclature connue de l'homme du métier du domaine des silicones) avec un polydiméthylsiloxane de viscosité de 100 MPa.s. Après homogénéisation on ajoute l'antimousse Silicex®120 (fourni par la société Rhodia, 0,4 % en poids). On obtient ainsi l'émulsion (A).

### Préparation d'une composition B (Comparatif, sans mica) :

Dans un mélangeur sont introduites l'eau (46,865%), l'antimousse Silicex®141 (0,2 % en poids), un biocide (0,15 % en poids), l'épaississant Rhéozan® (0,235 % en poids) avec un agent mouillant Trycol®5950. Après homogénéisation, sont introduites :
- une émulsion (15,91 % en poids) à base d'une huile α,ω-dihydroxypolydimethylsiloxane de viscosité 135 000 mPa.S (40% en extrait sec),
- un latex styrène/acrylate de butyle/ acide acrylique sous forme d'émulsion Rhodopas® DS 2800 (7,00 % en poids, vendu par la société Rhodia), de l'acide acétique (0,08 % en poids) et une émulsion (28,46 % en poids) comprenant un mélange d'un polydiméthylhydrogénosiloxane de formule MD'₅₀M (selon une nomenclature connue de l'homme du métier du domaine des silicones) avec un polydiméthylsiloxane de viscosité de 100 MPa.s. Après homogénéisation on ajoute l'antimousse Silicex®120 (fourni par la société Rhodia, 0,4 % en poids) et on obtient ainsi l'émulsion (B).

### Préparation d'une composition (Comparatif C, sans latex) :

Dans un mélangeur sont introduites l'eau (34,465 % en poids), un antimousse (Silicex®141, fourni par la société Rhodia, 0,2% en poids), un biocide (0,15% en poids), un polyéthylèneglycol PEG 300 (1,87 % en poids), un mica (taille de particules 39µm, 17,28 % en poids), un épaississant Rhéozan® (0,235 % en poids) avec un agent mouillant Trycol®5950 (0,7 % en poids). Après homogénéisation sont introduites :
- une émulsion (12,535 % en poids) à base d'une huile α,ω-dihydroxypolydimethylsiloxane de viscosité 135 000 mPa.S (40% en extrait sec),
- de l'acide acétique (0,08 % en poids) et une émulsion (28,46 % en poids) comprenant un mélange d'un polydiméthylhydrogénosiloxane de formule MD'₅₀M avec un polydiméthylsiloxane de viscosité de 100 MPa.s. Après homogénéisation on ajoute l'antimousse Silicex®120 (fourni par la société Rhodia, 0,4 % en poids) et on obtient ainsi l'émulsion (A).

Ces émulsions ont été évaluées par des tests d'application et dans des cas réels de production de pneumatiques.

### Descriptions des tests :

### Test de démoulage :

Préparation d'une feuille en caoutchouc vessie 3 mmx150mmx150mm dans une presse chauffante à 200°C pendant 30 minutes. La feuille est structurée en surface pour simuler la surface d'une vessie. La feuille est peinte avec l'agent démoulant en cabine de peinture en pulvérisation par air comprimé. On dépose une couche de 20µm environ. Après séchage à l'air, l'ensemble est cuit à 170°C pendant 10 minutes.

La feuille est ensuite placée dans un moule métallique dans une presse. Les plaques sont chauffées à 170°C. On laisse préchauffer la feuille pendant 20 minutes, puis on dépose, à quatre endroits, des morceaux de caoutchouc ILR cru (« Inner Liner Rubber » = coutchouc qui constitue la surface interne d'un pneumatique) sur la feuille revêtue de l'agent démoulant. On ferme le moule, puis la presse et on laisse cuire le ILR pendant 10 minutes. On ouvre le moule et on retire les fines feuilles ILR moulées. Pour que l'on considère qu'un démoulage est réussit, elles doivent se séparer sans forcer ni accrocher. Sinon on note l'échec du démoulage.
Le nombre de démoulages correspond au nombre de feuilles ILR démoulées sans accroche.

### Test de lubrification :

Ce test évalue le pouvoir lubrifiant des agents de démoulage.

Une feuille de caoutchouc vessie est préparée comme mentionné ci-dessus (dimensions : 2x7x19,5 mm³, surface lisse).

Une feuille de caoutchouc ILR de dimension 2x5x11,5 mm³ est préparée dans une presse chauffante à 170°C pendant 10 minutes.

La feuille de caoutchouc vessie est traitée avec 300 mg de l'agent démoulant par une application au pinceau. Le produit est cuit à 170°C pendant 10 min dans une étuve.

La feuille de caoutchouc vessie traitée est collée sur un support métallique horizontal.

La feuille de caoutchouc ILR lestée de 6,78kg est tirée par un dynamomètre. La force est enregistrée.

Le coefficient de friction est déterminé en divisant la force nécessaire pour tirer la feuille de caoutchouc ILR lestée par le poids du lest.

On affiche le nombre de passages pour lesquelles le k_{d} reste inférieur à 0,5.

### Test de perte :

Mode opératoire analogue au test de démoulage. La quantité de produit transféré sur la feuille de caoutchouc ILR est déterminée. On divise le poids de produit transféré sur la feuille de caoutchouc ILR par la surface de l'échantillon ILR. Ces résultats en mg/cm² sont divisés par l'épaisseur de la couche d'agent démoulant initiale. On obtient le transfert en %. Plus le taux de transfert est élevé moins il reste d'agent de démoulage disponible pour le prochain démoulage.

### Résultats :

**Tableau 1.**

| Produit | A Invention | B Comparatif Sans mica | C Comparatif Sans latex |
|---|---|---|---|
| Test "nombre de démoulages" sans tenir compte des défauts (bulles) | 6 | 10 | 4 |
| Test "lubrification" (k_{d} < 0,5) | 8 | 6 | 6 |
| Test de perte [%] | 9,1 | 7,7 | 30,8 |
| Test réel sur pneu de dimension 195/55/15 H : Nombre de démoulages sans défaut | 7 | 2 | |
| Test réel sur des pneus dimension : 205/55/16 W: Nombre de démoulages sans défaut | 6 | 2 | - |

L'agent de démoulage selon l'invention (A) permet de démouler un maximum de pneumatiques sans défauts. On n'observe pas de défauts dus à un mauvais échappement d'air.

Le produit B, qui ne contient pas de mica, est limité quand au nombre de démoulage sans défaut.

L'échantillon C, qui ne contient pas de latex selon l'invention, montre lors du premier démoulage une perte de produit beaucoup plus importante que l'échantillon A qui contient le latex selon l'invention, d'où le nombre réduit de passages possible dans le test de lubrification et le nombre réduit de démoulages possible.

L'utilisation d'un latex de polymère organique **(C)** associé à un agent d'évacuation de l'air **(D)** dans une composition selon l'invention permet d'obtenir un agent de démoulage qui assure une bonne efficacité en échappement de l'air avec un grand nombre de démoulages possible par application. Le latex spécifique selon l'invention permet en effet de fixer durablement le mica, responsable d'une bonne performance en échappement d'air, dans la matrice de l'agent de démoulage qui peut-être alors qualifié d'agent de démoulage semi-permanent ("multi release").

## Revendications

1. - Composition lubrifiante, sous forme d'émulsion huile dans eau, à base de polyorganosiloxane polymérisable et/ou réticulable par déshydrogéno-condensation comprenant :
**(a)** de 1 à 30 parties en poids d'au moins un polyorganosiloxane réactif **(A)** comportant au moins deux groupements OH par molécule et présentant une viscosité dynamique comprise entre 50 et 3 x10⁶ mPa.S à 25°C ,
**(b)** de 1 à 30 parties en poids d'au moins un agent réticulant **(B)** ayant, par molécule, au moins trois motifs réactifs ≡SiH ;
**(c)** de 0,1 à 10 parties en poids d'au moins un latex de polymère organique **(C)** provenant de la (co)polymérisation :
- d'au moins un monomère (méth)acrylate d'alkyle choisi parmi le groupe constitué par: le (méth)acrylate de méthyle, le (méth)acrylate d'éthyle, le (méth)acrylate de propyle et le (méth)acrylate de butyle,
- d'un monomère styrène, et
- éventuellement d'au moins un monomère choisi parmi le groupe constitué par : l'acide acrylique et l'acide méthacrylique.
**(d)** de 3 à 25 parties en poids d'au moins un agent d'évacuation de l'air **(D)** qui est un mica ;
**(e)** de 0.5 à 10 parties en poids d'au moins un tensioactif **(E)** ;
**(f)** de 0 à 30 parties en poids d'au moins une huile polyorganosiloxane linéaire non réactive **(F),** qui dans les conditions d'émulsification, de préparation de la composition lubrifiante et d'utilisation, ne réagit chimiquement avec aucun des constituants de la composition, présentant une viscosité dynamique de 50 à 100000 mPa.s à 25°C et consistant dans un homopolymère ou copolymère linéaire dont, par molécule, les substituants organiques monovalents, identiques ou différents entre eux, liés aux atomes de silicium, sont choisis parmi le groupe constitué par les radicaux alkyles, cycoalkyles, alcényles, aryles et alkylaryle ;
**(g)** de 0 à 30 parties en poids d'au moins un additif **(G)** choisi parmi le groupe constitué par : un agent épaississant polymères filmogènes, un lubrifiant complémentaire, un agent anti-friction, un agent de coalescence, un agent mouillant ou dispersant, une charge minérale, un agent antimousse, un épaississant, un stabilisant, un agent acidifiant, un biocide et un antifongique ;
**(h)** de 0 à 10 parties en poids d'au moins un catalyseur de déshydrogéno-condensation, et
**(i)** de 20 à 60 parties en poids d'eau,
pour 100 parties en poids de la somme des constituants **(a)** à **(i).**

2. - Composition lubrifiante selon la revendication 1 **caractérisée en ce que** le latex de polymère organique est choisi parmi: les copolymères styrène/acrylate de butyle/acide acrylique avec les rapports pondéraux suivants par rapport au poids total du copolymère :
- monomère styrène : entre 25 et 55 % en poids,
- monomère acrylate de butyle : entre 74,5 et 40 % en poids, et
- monomère acide acrylique : entre 0,5 et 5 % en poids.

3. - Composition lubrifiante selon l'une des revendications précédentes **caractérisée en ce que** l'agent réticulant **(B)** est choisi parmi ceux qui possèdent au moins un motif de formule (II) et qui sont terminés par des motifs de formule (III) ou cycliques constitués de motifs de formule (II) représentées ci-dessous : 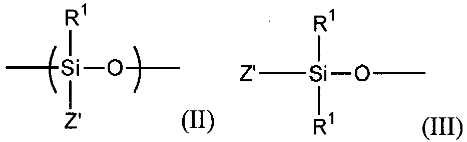 dans lesquelles :
- les symboles R¹, sont identiques ou différents et représentent :
un radical alkyle linéaire ou ramifié contenant 1 à 8 atomes de carbone, éventuellement substitué par au moins un halogène,
un radical cycloalkyle contenant entre 5 et 8 atomes de carbone cycliques, éventuellement substitué, ou un radical aryle contenant entre 6 et 12 atomes de carbone éventuellement substitué, une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alcoxyles contenant 1 à 3 atomes de carbone,
- les symboles Z' sont semblables ou différents et représentent :
- un radical hydrogène, ou
- un groupement répondant à la même définition que celle donnée ci-dessus pour R¹, avec, par molécule, au moins trois des symboles Z' représentant H.

4. - Composition lubrifiante selon l'une des revendications précédentes **caractérisée en ce que** le polyorganosiloxane réactif **(A)** comprend les motifs siloxyles suivants :
M = [(OH)(R²)₂SiO_{1/2}] et D= [R³R⁴SiO_{2/2}]
dans lesquels:
- R², R³ et R⁴ sont des radicaux, identiques ou différents, choisis parmi le groupe constitué par : les radicaux alkyles linéaires ou ramifiés en C₁-C₆ (tels que par exemple méthyle, éthyle, propyle, isopropyle, butyle, isobutyle, t-butyle, n-pentyle, n-hexyle), les radicaux cycloalkyles en C₃-C₈ (tels que par exemple cyclopentyle, cyclohexyle), les radicaux aryles en C₆-C₁₀ (tels que par exemple phényle, naphtyle) et les radicaux alkylarylènes en C₆-C₁₅ (tels que par exemple tolyles, xylyle).

5. - Composition lubrifiante selon l'une des revendications précédentes **caractérisée en ce que** le polyorganosiloxane réactif **(A)** est un α,ω-dihydroxypolydiméthylsiloxane.

6. - Article revêtu d'une composition selon l'une quelconque des revendications 1 à 5.

7. - Vessie dilatable selon la revendication 6 en caoutchouc pour le façonnage et la vulcanisation de bandages pneumatiques ou semi-pneumatiques.

8. - Bandage pneumatique ou semi-pneumatique cru comportant des éléments qui constitueront sa bande de roulement externe destinée à venir au contact du sol, selon la revendication 6.

9. . Article pouvant être obtenu par chauffage d'un article selon la revendication 6.

10. Vessie dilatable en caoutchouc selon la revendication 9, pouvant être obtenue par chauffage d'une vessie selon la revendication 7 à une température de 80 à 180°C.

11. - Utilisation d'une composition lubrifiante selon l'une quelconque des revendications 1 à 5 pour la lubrification d'un article.

12. - Utilisation d'une composition lubrifiante selon la revendication 11 lors du façonnage et de la vulcanisation de bandages pneumatiques ou semi-pneumatiques, pour la lubrification de la vessie de vulcanisation dilatable en caoutchouc.

## Patentansprüche

1. - Schmierend wirkende Zusammensetzung, in Form einer Öl-in-Wasser-Emulsion, auf Basis von Polyorganosiloxan, das mittels Kondensation unter Wasserstoffabspaltung polymerisierbar und/oder vernetzbar ist, Folgendes umfassend:
**(a)** 1 bis 30 Gewichtsteile mindestens eines reaktionsfähigen Polyorganosiloxans **(A),** das mindestens zwei OH-Gruppen pro Molekül aufweist und eine dynamische Viskosität im Bereich von 50 bis 3 x 10⁶ mPa.S bei 25 °C aufweist,
**(b)** 1 bis 30 Gewichtsteile mindestens eines Vernetzungsmittels **(B),** das mindestens drei reaktionsfähige Bausteine =SiH pro Molekül hat;
**(c)** 0,1 bis 10 Gewichtsteile mindestens eines organischen Polymerlatex **(C),** welcher durch (Co)polymerisation der folgenden Elemente erhalten wird:
- mindestens eines Alkyl(meth)acrylatmonomers, das aus der Gruppe ausgewählt ist, die aus den folgenden besteht: Methyl(meth)acrylat, Ethyl(meth)acrylat, Propyl(meth)acrylat und Butyl(meth)acrylat,
- mindestens eines Styrolmonomers, und
- möglicherweise mindestens eines Monomers, das aus der Gruppe ausgewählt ist, welche aus den folgenden besteht: Acrylsäure und Methacrylsäure.
**(d)** 3 bis 25 Gewichtsteile mindestens eines Entlüftungsmittels **(D),** wobei es sich um einen Glimmer handelt;
**(e)** 0,5 bis 10 Gewichtsteile mindestens eines Tensids **(E);**
**(f)** 0 bis 30 Gewichtsteile mindestens eines geradkettigen nicht reaktionsfähigen Polyorganosiloxanöls **(F),** das unter den Bedingungen der Emulsionsbildung, der Herstellung der schmierend wirkenden Zusammensetzung und der Verwendung keinerlei chemische Reaktion mit den Bestandteilen der Zusammensetzung eingeht, wobei es eine dynamische Viskosität von 50 bis 100.000 mPa.s bei 25 °C aufweist und aus einem geradkettigen Homopolymer oder Copolymer besteht, dessen einbindige organische Substituenten, welche gleichartig sind oder sich voneinander unterscheiden und an Siliciumatome gebunden sind, für jedes Molekül aus der Gruppe ausgewählt sind, die aus Alkyl-, Cycloalkyl-, Alkenyl-, Aryl- und Alkylarylresten besteht;
**(g)** 0 bis 30 Gewichtsteile mindestens eines Zusatzstoffs **(G)** der aus der Gruppe ausgewählt ist, welche aus den folgenden besteht: einem Verdickungsmittel für filmbildende Polymere, einem ergänzenden Schmiermittel, einem Gleitmittel, einem Koaleszenzmittel, einem Netzmittel oder Dispergiermittel, einem mineralischen Füllstoff, einem Schaumverhüter, einem Verdickungsmittel, einem Stabilisator, einem Säuerungsmittel, einem Biozid und einem pilzbekämpfenden Mittel;
**(h)** 0 bis 10 Gewichtsteile mindestens eines Katalysators für Kondensationen unter Wasserstoffabspaltung, und
**(i)** 20 bis 60 Gewichtsteile an Wasser,
auf 100 Gewichtsteile der Summe der Bestandteile **(a)** bis **(i).**

2. - Schmierend wirkende Zusammensetzung nach Anspruch 1, **dadurch gekennzeichnet, dass** der organische Polymerlatex aus den folgenden ausgewählt ist: den Styrol/Butylacrylat/Acrylsäure-Copolymeren mit den folgenden Gewichtsverhältnissen, unter Bezugnahme auf das Gesamtgewicht des Copolymers:
- Styrolmonomer: zwischen 25 und 55 Gewichts-%,
- Butylacrylatmonomer: zwischen 74,5 und 40 Gewichts-%, und
- Acrylsäuremonomer: zwischen 0,5 und 5 Gewichts-%.

3. - Schmierend wirkende Zusammensetzung nach einem der vorhergehenden Ansprüche, **dadurch gekennzeichnet, dass** das Vernetzungsmittel **(B)** aus den denjenigen ausgewählt ist, welche mindestens einen Baustein der Formel (II) besitzen und welche endständig Bausteine aufweisen, die der Formel (III) entsprechen oder zyklisch sind, wobei sie aus Bausteinen der Formel (II) bestehen, gemäß der nachstehenden Darstellung: 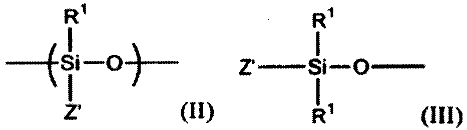 wobei:
- die Formelzeichen R¹ identisch oder verschiedenartig sind und für Folgendes stehen:
einen geradkettigen oder verzweigten Alkylrest, der 1 bis 8 Kohlenstoffatome enthält und möglicherweise mit mindestens einem Halogen substituiert ist,
einen Cycloalkylrest, die zwischen 5 und 8 ringständige Kohlenstoffatome enthält und möglicherweise substituiert ist, oder einen Arylrest, der zwischen 6 und 12 Kohlenstoffatome enthält und möglicherweise substituiert ist, einen Aralkylabschnitt, der einen Alkylabschnitt, welcher zwischen 5 und 14 Kohlenstoffatome enthält, und einen Arylabschnitt aufweist, welcher zwischen 6 und 12 Kohlenstoffatome enthält, wobei er möglicherweise am Arylabschnitt mit Halogenen,
mit Alkyl- und/oder Alkoxygruppen substituiert ist, welche 1 bis 3 Kohlenstoffatome enthalten,
- die Formelzeichen Z' identisch oder verschiedenartig sind und für Folgendes stehen:
- einen Wasserstoffrest, oder
- eine Gruppe, die derselben Begriffsbestimmung entspricht wie derjenigen, welche oben für R¹ angegeben ist, wobei an jedem Molekül mindestens drei der Formelzeichen Z' für H stehen.

4. - Schmierend wirkende Zusammensetzung nach einem der vorhergehenden Ansprüche, **dadurch gekennzeichnet, dass** das reaktionsfähige Polyorganosiloxan **(A)** die folgenden Siloxylbausteine umfasst:
M = [(OH)(R²)₂SiO_{1/2}] und D= [R³R⁴SiO_{2/2}]
wobei:
- R², R³ und R⁴ für identische oder verschiedenartige Reste stehen, die aus der Gruppe ausgewählt sind, welche aus den folgenden besteht: den geradkettigen oder verzweigten C₁-C₆-Alkylresten (wie beispielsweise Methyl, Ethyl, Propyl, Isopropyl, Butyl, Isobutyl, t-Butyl, n-Pentyl, n-Hexyl), den C₃-C₈-Cycloalkylresten (wie beispielsweise Cyclopentyl, Cyclohexyl), den C₆-C₁₀-Arylresten (wie beispielsweise Phenyl, Naphthyl) und den C₆-C₁₅-Alkylarylenresten (wie beispielsweise den Tolylen, Xylyl).

5. - Schmierend wirkende Zusammensetzung nach einem der vorhergehenden Ansprüche, **dadurch gekennzeichnet, dass** es sich bei dem reaktionsfähigen Polyorganosiloxan **(A)** um ein α,ω-Dihydroxypolydimethylsiloxan handelt.

6. - Gegenstand, der mit einer Zusammensetzung nach einem beliebigen der Ansprüche 1 bis 5 beschichtet ist.

7. - Dehnungsfähige Blase nach Anspruch 6 aus Kautschuk, zur Formgebung und Vulkanisation von Luft- oder Luftkammerreifen.

8. - Luft- oder Luftkammerreifenrohprodukt, das Elemente aufweist, die künftig dessen äußeren Laufstreifen darstellen wird, welcher dazu bestimmt ist, mit dem Boden in Kontakt zu kommen, nach Anspruch 6.

9. - Gegenstand, der durch Erwärmen eines Gegenstands nach Anspruch 6 erhalten werden kann.

10. - Dehnungsfähige Blase aus Kautschuk nach Anspruch 9, die durch Erwärmen einer Blase nach Anspruch 7 auf eine Temperatur von 80 bis 180 °C erhalten werden kann.

11. - Verwendung einer schmierend wirkenden Zusammensetzung nach einem beliebigen der Ansprüche 1 bis 5 zur Schmierung eines Gegenstands.

12. - Verwendung einer schmierend wirkenden Zusammensetzung nach Anspruch 11 bei der Formgebung und Vulkanisation von Luft- oder Luftkammerreifen, um die dehnungsfähige Vulkanisationsblase aus Kautschuk zu schmieren.

## Claims

1. Lubricating composition in the form of an oil-in-water emulsion, based on a polyorganosiloxane that can be polymerized and/or crosslinked by dehydrogeno-condensation, comprising:
(a) from 1 to 30 parts by weight of at least one reactive polyorganosiloxane (A) comprising at least two OH groups per molecule and having a dynamic viscosity of between 50 and 3×10⁶ mPa.s at 25°C;
(b) from 1 to 30 parts by weight of at least one crosslinking agent (B) having, per molecule, at least three reactive units =SiH;
(c) from 0.1 to 10 parts by weight of at least one organic polymer latex (C) coming from the (co)polymerization:
- of at least one alkyl (meth)acrylate monomer selected from the group formed by: methyl (meth)acrylate, ethyl (meth)acrylate, propyl (meth)acrylate and butyl (meth)acrylate;
- of a styrene monomer; and
- optionally, of at least one monomer chosen from the group formed by: acrylic acid and methacrylic acid;
(d) from 3 to 25 parts by weight of at least one air-removing agent (D) which is a mica;
(e) from 0.5 to 10 parts by weight of at least one surfactant (E);
(f) from 0 to 30 parts by weight of at least one unreactive linear polyorganosiloxane oil (F), which, under the conditions for emulsifying and preparing the lubricating composition and the use conditions, does not react chemically with any of the constituents of the composition, having a dynamic viscosity of 50 to 100000 mPa.s at 25°C and consisting of a linear homopolymer or copolymer in which, per molecule, the monovalent organic substituents, whether identical or different from one another, linked to the silicon atoms, are selected from the group formed by alkyl, cycloalkyl, alkenyl, aryl and alkylaryl radicals;
(g) from 0 to 30 parts by weight of at least one additive (G) selected from the group formed by: a film-forming polymer thickening agent, a complementary lubricant, an antifriction agent, a coalescence agent, a wetting or dispersing agent, a mineral filler, an antifoam agent, a thickener, a stabilizer, an acidifying agent, a biocide and an antifungal agent;
(h) from 0 to 10 parts by weight of at least one dehydrogeno-condensation catalyst; and
(i) from 20 to 60 parts by weight of water, for 100 parts by weight of the sum of the constituents (a) to (i).

2. Lubricating composition according to Claim 1, **characterized in that** the organic polymer latex is selected from: styrene/butyl acrylate/acrylic acid copolymers with the following weight ratios relative to the total weight of the copolymer:
- styrene monomer: between 25 and 55% by weight;
- butyl acrylate monomer: between 74.5 and 40% by weight; and
- acrylic acid monomer: between 0.5 and 5% by weight.

3. Lubricating composition according to either of the preceding claims, **characterized in that** the crosslinking agent (B) is selected from those that possess at least one unit of formula (II) and that are terminated by units of formula (III), or cyclic ones consisting of units of formula (II) shown below: 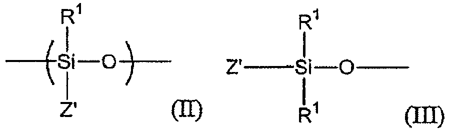 in which:
- the symbols R¹ are identical or different and represent:
a linear or branched alkyl radical containing 1 to 8 carbon atoms, optionally substituted with at least one halogen, propyl, octyl or 3,3,3-trifluoropropyl radicals,
a cycloalkyl radical containing between 5 and 8 cyclic carbon atoms, optionally substituted or an aryl radical containing between 6 and 12 carbon atoms, optionally substituted, an aralkyl part having an alkyl part containing between 5 and 14 carbon atoms and an aryl part containing between 6 and 12 carbon atoms, which is optionally substituted on the aryl part with halogens, alkyls and/or alkoxyls containing 1 to 3 carbon atoms;
- the symbols Z' are similar or different and represent:
- a hydrogen radical or
- a group satisfying the same definition as that given above for R¹, with, per molecule, at least three of the symbols Z' representing H.

4. Lubricating composition according to one of the preceding claims, **characterized in that** the reactive polyorganosiloxane (A) comprises the following siloxyl units:
M = [(OH)(R²)₂SiO_{1/2}] and D = [R³R⁴SiO_{2/2}]
in which:
- R², R³ and R⁴ are identical or different radicals selected from the group formed by: C₁-C₆ linear or branched alkyl radicals (such as for example methyl, ethyl, propyl, isopropyl, butyl, isobutyl, t-butyl, n-pentyl and n-hexyl), C₃-C₈ cycloalkyl radicals (such as for example cyclopentyl and cyclohexyl), C₆-C₁₀ aryl radicals (such as for example phenyl and naphthyl) and C₆-C₁₅ alkylarylene radicals (such as for example tolyl and xylyl).

5. Lubricating composition according to one of the preceding claims, **characterized in that** the reactive polyorganosiloxane (A) is an α,ω-dihydroxypolydimethylsiloxane.

6. Article coated with a composition according to any one of Claims 1 to 5.

7. Inflatable rubber bladder according to Claim 6, for the shaping and curing of pneumatic or semi-pneumatic tires.

8. Green pneumatic or semi-pneumatic tire comprising elements that will constitute its external tread intended to come into contact with the ground, according to Claim 6.

9. Article that can be obtained by heating an article according to Claim 6.

10. Inflatable rubber bladder according to Claim 9 that can be obtained by heating a bladder according to Claim 7 to a temperature of 80 to 180°C.

11. Use of a lubricating composition according to any one of Claims 1 to 5 for the lubrication of an article.

12. Use of a lubricating composition according to Claim 11 during the shaping and curing of pneumatic or semi-pneumatic tires, for the lubrication of the inflatable rubber curing bladder.
